# EUROPEAN PATENT SPECIFICATION

(11) **EP 1 755 333 B1**
(45) Date of publication and mention of the grant of the patent: **08.03.2017**
(21) Application number: 06118368.7
(22) Date of filing: 03.08.2006
(51) Int. Cl.: H04N 5/225, B62B 7/08, B62B 7/10

(54) **Pram**
Kinderwagen
Poussette

(30) Priority: 16.08.2005 SE 0501814
(43) Date of publication of application: 21.02.2007
(73) Proprietor: Care Barnvagnar AB, 201 23 Malmö (SE)
(72) Inventor: Holma, Thomas, 376 37, Svängsta (SE); Magnusson, Andreas, 352 50, Växjö (SE); Birger, Johan, 211 43, Malmö (SE)
(74) Representative: Bosch, Matthias

(56) References cited:
- DE-C- 376 250
- DE-U1- 29 701 754
- DE-U1- 29 910 609
- US-A1- 2005 046 152

## Description

### Field of the Invention

The present invention relates to a pram with a folding chassis according to the preamble to claim 1.

### Background Art

Such prams with four wheels are disclosed, for instance, in GB, A, 2015436 and US, A, 2564266, and allow that the distance between a front and a rear pair of wheels is reduced in folding the pram.

Prior-art prams of this type, however, have complicated constructions with a large number of movable parts and are also either heavy or easily damaged, depending on how these movable parts are dimensioned. To fold a pram of prior-art type is also a complicated procedure for the user.

DE 299 10 609 U1 which is considered as being the closest prior art, discloses a foldable chassis carrying wheels, wherein the relative distance of the wheels decreases when folding the chassis. It does not disclose a scissor mechanism.

### Summary of the Invention

An object of the present invention therefore is to provide a pram of the type mentioned by way of introduction, which is robust, simple and easy to fold.

This object is achieved by a pram according to claim 1. A pram constructed in this manner is both robust and simple and can be folded in simple operations.

Advantageous embodiments of the invention will be evident from the dependent claims.

### Brief Description of the Drawings

Fig. 1 is a perspective view of a pram according to an embodiment of the present invention.
Fig. 2 illustrates the pram in Fig. 1 in a folded state.
Fig. 3 is a side view of a pram chassis in a first state.

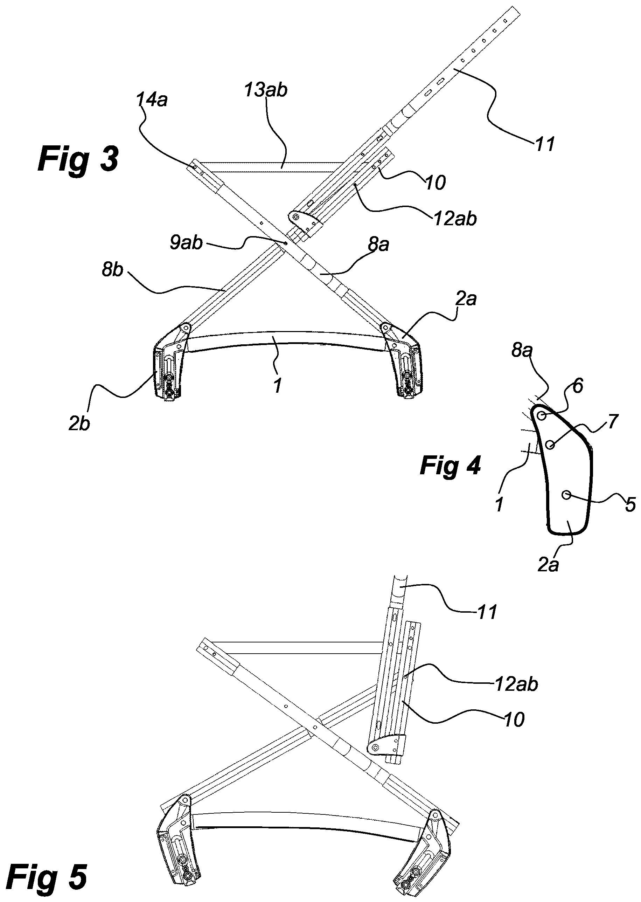

Fig. 3 is a side view of a pram chassis in a first state.
Fig. 4 shows an enlarged detail in Fig. 3.
Figs 5-8 illustrate the pram chassis in Fig. 3 in a second to a fifth state, increasingly folded.

Identical reference numerals designate the same elements in the different Figures.

### Description of Preferred Embodiments

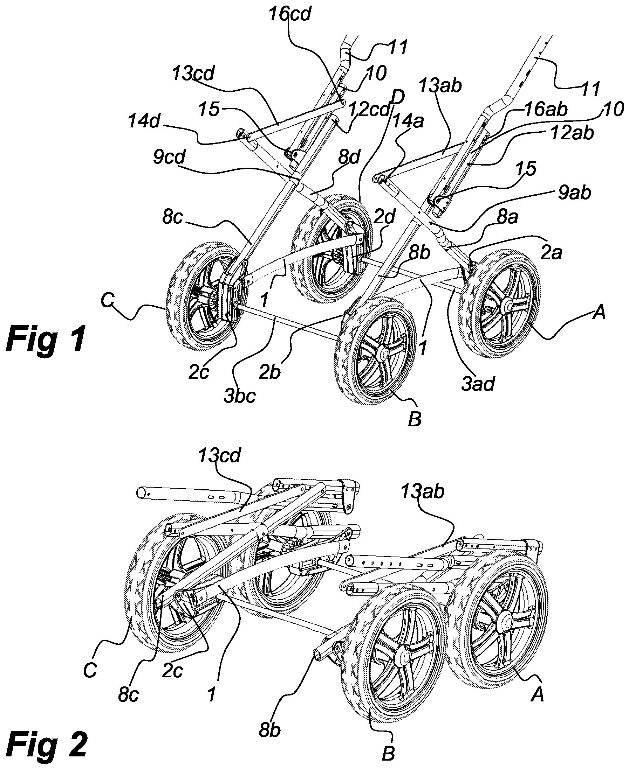

Fig. 1 shows a pram with four wheels A-D, which are each attached to a wheel holder 2a-2d (2a and 2b partially concealed). The front wheel pair B, C has a common wheel axle 3bc, like the rear wheel pair A, D (3ad). The wheel holders are in turn attached to a frame 1, which in the shown example consists of two longitudinal (in the travelling direction of the pram) rods. The frame may also consist of a rectangular frame or be, for instance, in the shape of an H. In such cases the wheel pairs do not need common physical wheel axles.

Fig. 4 shows an example of a wheel holder 2a. Each wheel holder has the shape of a link which at one end is rotatably connected to the associated wheel axle at a wheel axle hinge point 5. At its other end, the wheel holder is at a rod hinge point 6 connected to a longitudinal rod and articulated about an axis transverse to the travelling direction of the pram. Between the wheel axle hinge point 5 and the rod hinge point 6, the wheel holder 2a-2d is at a frame hinge point 7 pivotable about an axis transverse to the travelling direction of the pram and connected to the frame 1. As shown in Fig. 4, the frame hinge point 7 can be positioned approximately on a line between the wheel axle hinge point 5 and the rod hinge point 6, but the frame hinge point 7 may also deviate from this line.

The distance between the rod hinge point 6 and the frame hinge point 7 can be smaller than the distance between the frame hinge point 7 and the wheel axle hinge point 5, so that an increased gear ratio is achieved. This means that the wheel axle distance is reduced more for a given movement of the rod hinge point 6 when folding the pram.

The wheel axle hinge point 5 is in the unfolded state preferably arranged below the frame hinge point 7, so that an angle between a line connecting the wheel axle hinge point 5 and the frame hinge point 7 deviates by less than 45° from vertical. As a result, in connection with folding, the wheel axle hinge point 5 is moved closer to the plane of the frame 1. This means that the frame in the folded state will be more compact also in the vertical direction.

Referring once more to Fig. 1, each wheel holder is, as mentioned above, articulatedly connected to a longitudinal rod, 2a to 8a, 2b to 8b etc.

The two front wheel holders 2b, 2c are each articulated to a first rod 8b, 8c at the front end thereof, seen in the travelling direction of the pram. Correspondingly, the two rear wheel holders 2a, 2d are each connected to a second rod 8a, 8d at the rear end thereof.

At each side of the pram, the first and the second longitudinal rod are, on each side of the pram, articulated to each other about an axis transverse to the travelling direction of the pram at a scissor hinge point 9ab, 9cd so as to form a scissor mechanism.

If, when folding the pram, the front end of the respective first rods 8b, 8c can be made, by means of the scissor mechanisms, to move forwards and the rear end of the respective second rods 8a, 8d to move backwards, each wheel holder 2a-2d will be pivoted about its frame hinge point, so that the rear wheel pair AD is moved forwards and the front wheel pair BC is moved backwards, thus making the pram in the folded state very compact. The great axle distance in the unfolded state gives stability in use.

Each scissor mechanism is actuated by a handle part 11 and a link arm 13ab, 13cd. The handle parts can be parts of a U-shaped handle (shown only partially in Figs 1-2). The handle parts 11 are articulated to the two first longitudinal rods 8b, 8c at hinge points 12ab, 12cd, which are positioned on opposite sides of the scissor hinge points relative to the front wheel holders 2b, 2c.

In the unfolded state, the handle parts are locked by a lock mechanism (not shown) either relative to the second rods 8a and 8d, respectively, or relative to the first rods 8b and 8c, respectively.

The handle parts 10, 11 shown in Fig. 1 are divided, that is they consist in their lower parts of two parallel tubes 10, 11. When the pram is unfolded, they can be released from each other and pivoted relative to each other about a handle pivot point 15. It will then be possible to move the handle parts 11, which can form a U, over the entire pram so that the pram can be pushed backwards. When the pram is to be folded, the parts 10, 11 should be fixed parallel to each other, as shown in Fig. 1.

The present invention can also be applied when the handle parts are not divided. The shown parts 10 are then imagined to be extended and can form the legs of a U.

Each link arm 13ab, 13cd pivotally connects the handle part 10, 11 and the second longitudinal rod 8a and 8d, respectively. Each link arm is connected to the handle part at a point 16ab and 16cd, respectively, which is positioned on the opposite side of the hinge points 12ab, 12cd, where the handle parts are fixed to the first rods 8b, 8c, seen from the front wheel holders 2b, 2c. Moreover the link arms 13ab, 13cd are connected to the associated second longitudinal rod 8a, 8b at points 14a and 14d, respectively, which are positioned on the opposite side of the scissor hinge points 9ab, 9cd seen from the rear wheel holders 2a, 2d. This arrangement has been found to allow simple folding of the pram, in a soft continuous motion.

The pram chassis is folded by the handle parts 10, 11 being released and moved forwards. Fig. 2 illustrates the pram in Fig. 1 in its folded state. As is evident from Fig. 2, the pram will be very compact and can therefore easily be put in, for instance, a boot of a car.

The folding operation will be described in more detail with reference to Fig. 3 and Figs 5-8, which illustrate a pram chassis in a side view at different stages of folding.

In general, the rods and the frame may consist of steel or aluminium tubes and/or aluminium sections, the link arms may consist of flat bars, and the wheel holders can be made of injection-moulded plastic, reinforced with aluminium sheets, or be made of cast aluminium. In Fig. 3, the pram is completely unfolded and the handle parts 10, 11 are fixed to the rod 8a by means of a lock mechanism of plastic (not shown). The distance between the hinge point 12ab of the handle part 10, where it is attached to the first rod 8b, and the point 14a, where the link arm 13ab is attached to the second rod 8a, is here 337 mm. The distance between the respective rod hinge points 6 of the wheel holders 2a, 2b is 415 mm. The distance between the wheel axles is 485 mm.

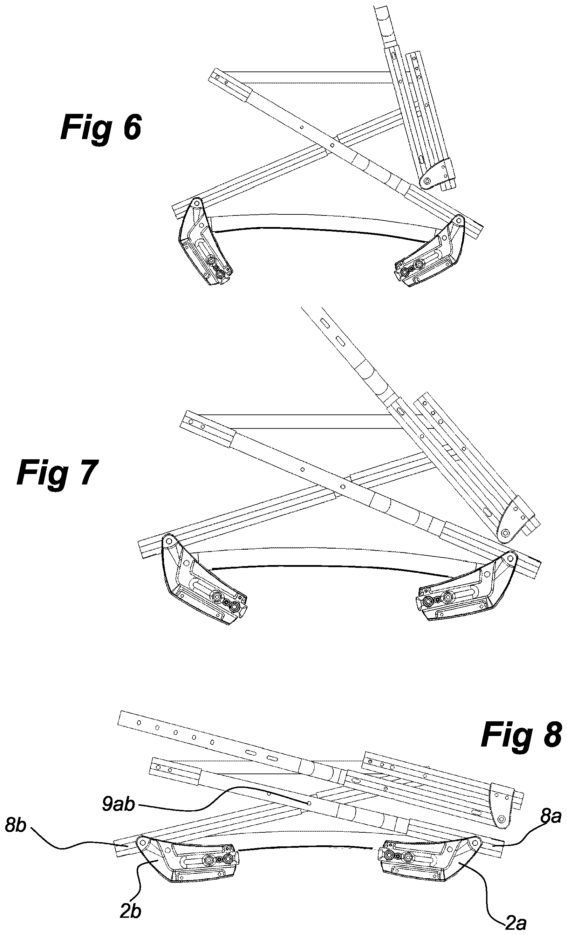

In Fig. 5, the handle parts are released from the rod 8a and the handle is being pivoted forwards. Thus the rods 8a, 8b are forced increasingly apart above the scissor hinge point, which means that also the distance between the respective rod hinge points 6 of the wheel holders 2a, 2b increases. Since the wheel holders 2a, 2b are held together by the frame 1, the wheel holders are pivoted about their frame hinge points 7. The distance between the wheel axles decreases more and more, which is evident from Figs 6-8. In Fig. 8, the pram is completely folded and the distance between the wheel axles has now decreased significantly, to 307 mm.

In the Figures shown, the pram has no stroller insert or pram insert in order to elucidate the design of the chassis. Such an insert can be attached to the chassis in a manner known per se when the chassis is unfolded.

The invention is not limited to the embodiment shown above and may be varied within the scope of the appended claims.

## Claims

1. A pram with a folding chassis, which carries a front and a rear pair of wheels, the relative distance of which decreases when folding the chassis, wherein
- the chassis comprises a frame (1) and four longitudinal rods (8a, 8b, 8c, 8d), said frame being provided with a wheel holder (2a, 2b, 2c, 2d) for each of the wheels, each wheel holder supporting the associated wheel axle and at one end being rotatably connected to the associated wheel axle at a hinge point (5), at its other end being connected, articulated about an axis transverse to a travelling direction of the pram, to one of said longitudinal rods (8a, 8b, 8c, 8d), at a rod hinge point (6), and, between the hinge point (5) and the rod hinge point (6), being pivotable on an axis transverse to a travelling direction of the pram and connected to the frame at a frame hinge point (7),
- the two front wheel holders (2b, 2c) being each connected to a first longitudinal rod (8b, 8c), at the front end thereof, and the two rear wheel holders (2a, 2d) being each connected to a second longitudinal rod (8a, 8d) at the rear end thereof,
- the first and the second longitudinal rod on each side of the pram being articulated about an axis, transverse to a travelling direction of the pram, where they are connected to each other at a scissor hinge point (9ab, 9cd) in such a manner as to form a scissor mechanism,
- a handle part (11) being articulated to the two first longitudinal rods (8b, 8c) at hinge points (12ab, 12cd) which are positioned on opposite sides of the scissor hinge points seen from the front wheel holders (2b, 2c), and
- on each side of the pram, a link arm (13ab, 13cd) pivotally connecting the handle part (11) to the second longitudinal rod (8a, 8d) at a point (14a, 14d) which is positioned on the opposite side of the scissor hinge point (9ab, 9cd) seen from the rear wheel holders (2a, 2d).

2. A pram as claimed in claim 1, in which each wheel holder supports the associated wheel axle at a wheel axle hinge point (5), is connected to the associated longitudinal rod at a rod hinge point (6) and is connected to the frame at a frame hinge point (7), the distance between the rod hinge point (6) and the frame hinge point (7) being smaller than the distance between the frame hinge point (7) and the wheel axle hinge point (5).

3. A pram as claimed in claim 2, in which the wheel axle hinge point (5) is arranged on the wheel holder in such a manner that, when folding the chassis, the wheel axle hinge point is moved closer to the plane of the frame.

## Patentansprüche

1. Kinderwagen mit einem zusammenlegbaren Fahrgestell, das ein vorderes und ein hinteres Paar von Rädern trägt, deren relativer Abstand beim Zusammenlegen des Fahrgestells abnimmt, wobei
- das Fahrgestell einen Rahmen (1) und vier Längsstangen (8a, 8b, 8c, 8d) aufweist, wobei der Rahmen mit einem Radhalter (2a, 2b, 2c, 2d) für jedes der Räder versehen ist, wobei jeder Radhalter die zugehörige Radachse stützt und an einem Ende an einem Gelenkpunkt (5) drehbar mit der zugehörigen Radachse verbunden ist, an seinem anderen Ende, angelenkt um eine Achse quer zur Fahrtrichtung des Kinderwagens, mit einer der Längsstangen (8a, 8b, 8c, 8d) an einem Stangengelenkpunkt (6) verbunden ist, und, zwischen dem Gelenkpunkt (5) und dem Stangengelenkpunkt (6), auf einer Achse quer zur Fahrtrichtung des Kinderwagens schwenkbar ist und an einem Rahmengelenkpunkt (7) mit dem Rahmen verbunden ist,
- die beiden vorderen Radhalter (2b, 2c) jeweils mit einer ersten Längsstange (8b, 8c) an deren vorderem Ende verbunden sind und die beiden hinteren Radhalter (2a, 2d) jeweils mit einer zweiten Längsstange (8a, 8d) an deren hinterem Ende verbunden sind,
- die erste und die zweite Längsstange an jeder Seite des Kinderwagens um eine Achse, quer zur Fahrtrichtung des Kinderwagens, angelenkt sind, wobei sie miteinander an einem Scherengelenkpunkt (9ab, 9cd) derart verbunden sind, dass sie einen Scherenmechanismus bilden,
- ein Griffteil (11) an den beiden ersten Längsstangen (8b, 8c) an Gelenkpunkten (12ab, 12cd) angelenkt ist, die von den vorderen Radhaltern (2b, 2c) aus gesehen an gegenüberliegenden Seiten der Scherengelenkpunkte positioniert sind, und
- auf jeder Seite des Kinderwagens ein Verbindungsarm (13ab, 13cd) das Griffteil (11) mit der zweiten Längsstange (8a, 8d) an einem Punkt (14a, 14d) schwenkbar verbindet, der von den hinteren Radhaltern (2a, 2d) aus gesehen an der gegenüberliegenden Seite des Scherengelenkpunkts (9ab, 9cd) positioniert ist.

2. Kinderwagen nach Anspruch 1, wobei jeder Radhalter die zugehörige Radachse an einem Radachsengelenkpunkt (5) stützt, mit der zugehörigen Längsstange an einem Stangengelenkpunkt (6) verbunden ist und mit dem Rahmen an einem Rahmengelenkpunkt (7) verbunden ist, wobei der Abstand zwischen dem Stangengelenkpunkt (6) und dem Rahmengelenkpunkt (7) kleiner ist als der Abstand zwischen dem Rahmengelenkpunkt (7) und dem Radachsengelenkpunkt (5).

3. Kinderwagen nach Anspruch 2, wobei der Radachsengelenkpunkt (5) an dem Radhalter derart angeordnet ist, dass beim Zusammenlegen des Fahrgestells der Radachsengelenkpunkt näher an die Ebene des Rahmens bewegt wird.

## Revendications

1. Poussette avec un châssis pliant, qui comporte une paire avant et une paire arrière de roulettes, la distance relative desquelles diminue lors du pliage du châssis, dans laquelle
- le châssis comprend un cadre (1) et quatre barres longitudinales (8a, 8b, 8c, 8d), ledit cadre étant prévu avec porte-roulette (2a, 2b, 2c, 2d) pour chacune des roulettes, chaque porte-roulette supportant l'axe de roulette associé et étant à une extrémité connecté rotatif à l'axe de roulette associé au niveau d'un point d'articulation (5), étant à son autre extrémité connecté, articulé autour d'un axe transversal à un sens de déplacement de la poussette, à une desdites barres longitudinales (8a, 8b, 8c, 8d), au niveau d'un point d'articulation (6) de barre, et, entre le point d'articulation (5) et le point d'articulation (6) de barre, étant pivotant sur un axe transversal à un sens de déplacement de la poussette et connecté au cadre au niveau d'un point d'articulation (7) de cadre,
- les deux porte-roulette avant (2b, 2c) étant chacun connecté à une première barre longitudinale (8b, 8c), au niveau de l'extrémité avant de celle-ci, et les deux porte-roulette arrière (2a, 2d) étant chacun connecté à une deuxième barre longitudinale (8a, 8d), au niveau de l'extrémité arrière de celle-ci,
- la première et la deuxième barre longitudinale sur chaque côté de la poussette étant articulées autour d'un axe, transversal à un sens de déplacement de la poussette, où elles sont connectées l'une à l'autre au niveau d'un point d'articulation (9ab, 9cd) à compas de manière à former un mécanisme à compas,
- une partie (11) de poignée étant articulée sur les deux premières barres longitudinales (8b, 8c) au niveau de points d'articulation (12ab, 12cd) qui sont positionnés sur des côtés opposés des points d'articulation à compas, vus depuis les deux porte-roulette avant (2b, 2c), et
- sur chaque côté de la poussette, un bras de liaison (13ab, 13cd) connectant de manière pivotante la partie (11) de poignée à la deuxième barre longitudinale (8a, 8d) en un point (14a, 14d) qui est positionné sur le côté opposé du point d'articulation (9ab, 9cd) à compas, vu depuis les deux porte-roulette arrière (2a, 2d).

2. Poussette selon la revendication 1, dans laquelle chaque porte-roulette supporte l'axe de roulette associé au niveau d'un point d'articulation (5) d'axe de roulette, est connecté à la barre longitudinale associée au niveau d'un point d'articulation (6) de barre et est connecté au cadre au niveau d'un point d'articulation (7) de cadre, la distance entre le point d'articulation (6) de barre et le point d'articulation (7) de cadre étant plus petite que la distance entre le point d'articulation (7) de cadre et le point d'articulation (5) d'axe de roulette.

3. Poussette selon la revendication 2, dans laquelle le point d'articulation (5) d'axe de roulette est agencé sur le porte-roulette de telle manière que, lors du pliage du châssis, le point d'articulation d'axe de roulette est rapproché du plan du cadre.
